# EUROPÄISCHE PATENTSCHRIFT

(11) **EP 0 784 165 B1**
(45) Veröffentlichungstag und Bekanntmachung des Hinweises auf die Patenterteilung: **11.08.1999**
(21) Anmeldenummer: 97100070.8
(22) Anmeldetag: 03.01.1997
(51) Int. Cl.: F16G 11/12

(54) **Seilspannvorrichtung**
Cable tensioning device
Dispositif tendeur de câble

(30) Priorität: 10.01.1996 DE 29600366 U
(43) Veröffentlichungstag der Anmeldung: 16.07.1997
(73) Patentinhaber: H. Büsche GmbH & Co. KG, 58808 Neuenrade (DE)
(72) Erfinder: Schubert, Bernd, 58809 Neuenrade (DE); Bongard, Hans-Theo, 58802 Balve (DE)
(74) Vertreter: Strehl Schübel-Hopf & Partner

(56) Entgegenhaltungen:
- FR-A- 444 207

## Beschreibung

Die Erfindung betrifft eine Seilspannvorrichtung zur Montage eines Spannseils an einer Wand oder Decke, wobei das Spannseil zum Anbringen z.B. eines Vorhangs oder von Niedervoltlampen dient.

Die bekannten Spannseilvorrichtungen setzen sich aus einem an der Wand oder Decke mittels befestigbaren Trägerteil und mit diesem Trägerteil vorzugsweise beweglich verbundenen Spannstift, der an seinem Stiftende ein Außengewinde trägt, zusammen. Auf diesen Spannstift ist eine als Hülse mit Innengewinde ausgebildete Spannmutter aufschraubbar, die an ihrem vorderen Ende mit einer Vorrichtung zur Anbringung eines Spannseils, z.B. einer Klemmverbindung, versehen ist. Bei diesen bekannten Seilspannvorrichtungen ist jedoch ein hoher Kraftaufwand zum Seilspannen notwendig, insbesondere wenn ein großes Gewicht auf dem Spannseil lastet. Weiterhin ist ein exaktes Ausrichten der Spannmutter mit dem Spannstift beim Aufsetzen der Spannmutter erforderlich, um ein Verkanten von Stift und Mutter und damit ein schwergängiges Einschrauben und Beschädigen der Gewinde zu verhindern. Die bekannten Seilspannvorrichtungen haben außerdem den Nachteil, daß zum Ausführen der Schraubenumdrehung beim Anziehen der Spannmutter nur die kleine Fläche der Spannmutter zum Angreifen zur Verfügung steht.

Aus der FR-A-444 207 ist eine Seilspannvorrichtung gemäß dem Oberbegriff des Anspruchs 1 bekannt. Bei dieser Seilspannvorrichtung weist ein Hülsenelement eine Bohrung mit einer in der Bohrung angebrachten Auskragung auf, mit der ein Kopfteil einer Spannschraube gegen den Zug eines Spannseils festgehalten wird. Bei der Montage des Spannseils muß eine das Spannseil tragende Spannmutter gegen die Zugrichtung des Spannseils in die Bohrung des Hülsenelements eingeschoben und so lange festgehalten werden, bis die Spannschraube mit dieser Spannmutter in Eingriff gebracht worden ist. Da am Spannseil oft erhebliche Zugkräfte anliegen, kann deshalb für die Montage ein hoher Kraftaufwand erforderlich werden.

Aufgabe der Erfindung ist es deshalb, eine Seilspannvorrichtung bereit zu stellen, die ein besonders einfaches und leichtgängiges Spannen eines Spannseils ermöglicht.

Diese Aufgabe wird durch die im Anspruch 1 angegebenen Maßnahmen gelöst. Bevorzugte Ausführungsformen sind in den abhängigen Ansprüchen angegeben.

Bei der erfindungsgemäßen Seilspannvorrichtung ist gegenüber den bekannten Seilspannvorrichtungen ein mit einer durchgehenden Bohrung versehenes, mit dem Wand- oder Deckenträgerteil verbundenes Hülsenelement zusätzlich vorgesehen. Der Einschraubmechanismus ist in dieser Hülse beweglich angeordnet, wobei das zum Ausführen der Schraubbewegung benutzte, vom Spannseil abgewandte Element der Einschraubverbindung von der Hülse gegen die Seilspannrichtung gehalten wird. Diese Ausgestaltung der Seilspannvorrichtung verhindert ein Verkanten beim Zusammenfügen der beiden Elemente der Einschraubverbindung und somit eine Beschädigung der Gewinde. Weiterhin ermöglicht ein solcher frei zugänglicher Einschraubmechanismus ein leichtgängiges Seilspannen.

Gemäß einer bevorzugten Ausführungsform dient das nicht mit dem Spannseil verbundene Einschraubelement zum Ausführen der Schraubbewegungen. Hierdurch läßt sich die zum Lösen und Anziehen des Spannseils notwendige Kraft weiter vermindern.

Gemäß einer weiteren bevorzugten Ausführungsform ist das das Spannseil haltende Element der Einschraubverbindung als hülsenartige Spannmutter und das Gegenstück zum Ausführen der Schraubbewegung als stiftförmige Spannschraube ausgelegt, wobei nur der zum Ausführen der Drehbewegungen notwendige Kopfbereich der Spannschraube aus der mit dem Trägerteil verbundenen Hülse heraussteht. Durch diesen weitgehend vollständigen Einbau des Spannmechanismus in die Hülse ist es möglich, das Design der Seilspanngarnitur unabhängig von den Anforderungen des Spannmechanismus nach optischen Gesichtpunkten frei zu gestalten.

Vorteilhaft ist es außerdem, die Spannmutter als Sechskant auszubilden und die diese Spannmutter aufnehmende Bohrung des am Trägerteil befestigten Hülsenelements sternförmig mit sechs oder einem Mehrfachen von sechs Kanten auszulegen. Hierdurch wird eine genaue Führung der mit dem Spannseil verbundenen Spannmutter beim Schraubvorgang und somit ein leichtgängiges Spannen gewährleistet.

Weitere Merkmale und Vorteile der Erfindung werden anhand der beigefügten Zeichnungen dargestellt. In den Zeichnungen zeigt
Fig. 1 eine erste, zusammengebaute Ausführungsform der erfindungsgemäßen Seilspannvorrichtung;
Fig. 2 eine Schnittansicht eines Ausschnitts der in Fig. 1 gezeigten ersten Ausführungsform;
Fig. 3 einen Querschnitt längs der A-A-Linie in Fig. 2;
Fig. 4 eine zweite, zusammengebaute Ausführungsform der erfindungsgemäßen Seilspannvorrichtung; und
Fig. 5 eine Schnittansicht eines Ausschnitts der in Fig. 4 gezeigten zweiten Ausführungsform.

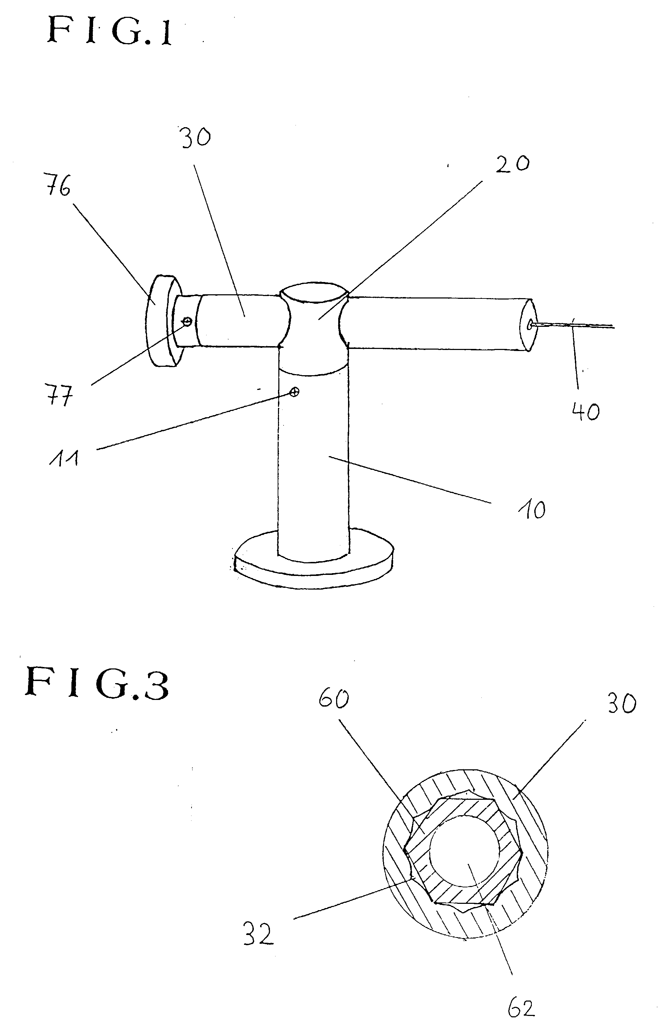

Die in Fig. 1 gezeigte erste Ausführungsform der erfindungsgemäßen Seilspannvorrichtung weist ein stabförmiges Trägerteil auf. Dieses Trägerteil setzt sich aus einem an einer Wand oder Decke mittels z.B. Dübel und Schraube befestigbaren Fußabschnitt **10** einem und auf diesem Fußabschnitt angeordneten Rohrlager **20** zusammen. Das Rohrlager **20** ist dabei leicht lösbar durch einen, an einem in den Fußabschnitt **10** hineinragenden Rohrlagerabschnitt (nicht gezeigt) angreifenden Gewindestift **11** festgeklemmt. Alternativ kann das Rohrlager jedoch auch beweglich mit dem Fußabschnitt verbunden sein. Im Rohrlager **20** ist ein Hülsenelement **30** angeordnet, das ebenfalls vorzugsweise mittels einer zwischen Rohrlager und Hülsenelement angeordneten Klemmverbindung festgehalten wird.

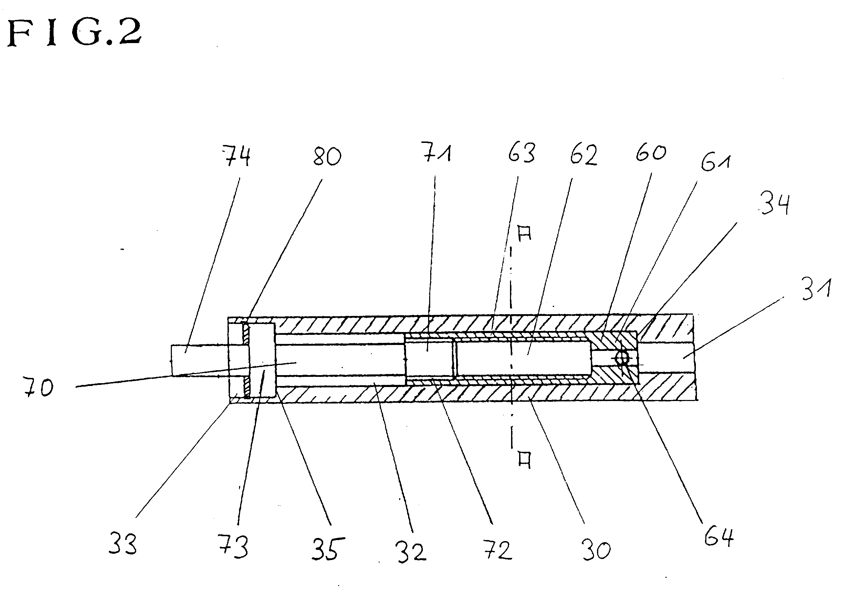

Wie in Fig. 2 gezeigt weist das Hülsenelement **30** eine durchgehende Bohrung auf, in der ein aus einer Spannmutter **60** und einer Spannschraube **70** bestehender Einschraubmechanismus zum Spannen des Spannseils **40** angeordnet werden kann. Die Bohrung besteht aus drei Abschnitten mit unterschiedlichem Durchmesser. Der dem Spannseil zugewandte erste Abschnitt **31** der Bohrung hat einen vorzugsweise kreisförmigen Querschnitt. Der Durchmesser dieses ersten Abschnitts **31** ist dabei so gewählt, daß er zur Aufnahme eines, einige Millimeter starken Spannseils geeignet, jedoch kleiner als der Durchmesser der Spannmutter **70** ausgelegt ist. Der Durchmesser des ersten Abschnitts **31** beträgt vorzugsweise 2 und 6 mm. An diesem kurzen ersten Abschnitt **31** der Bohrung schließt sich ein zweiter Abschnitt **32** an, dessen Durchmesser größer ist als der des ersten Abschnitts und der vorzugsweise dem der Spannmutter **60** entspricht. Für eine exakte Führung der Spannmutter **60** im zweiten Abschnitt **32** ist die Spannmutter als Sechskant ausgebildet und der zweite Abschnitt mit einem sternförmigen Querschnitt mit sechs oder einem Mehrfachen von sechs Ecken versehen.

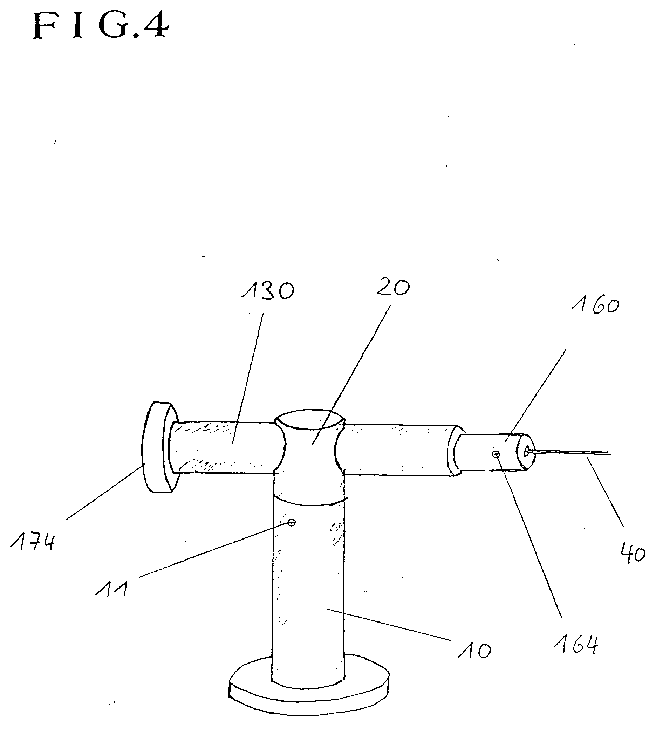

In Fig. 3 ist ein solcher zwölfzackiger Querschnitt des zweiten Abschnitts **32** der Hülsenelementbohrung mit eingefügter sechskantiger Spannmutter **60** dargestellt. Die Länge des zweiten Abschnitts **32** wird vorzugsweise so gewählt, daß die Spannmutter **60** und der nur mit seinem Gewindeteil **72** in die Spannmutter eingeschraubte Schaft **71** der Spannschraube **70** vollständig aufgenommen sind. An den zweiten Abschnitt **32** der Bohrung des Hülsenelements **30** schließt sich ein dritten Abschnitt **33** mit vorzugsweise kreisförmigen Querschnitt an, dessen Durchmesser dem des Kopfes **73** der Spannschraube **70** entspricht. Der dritte Abschnitt **33** der Bohrung ist so ausgelegt, daß er über den am Anschlag **35** zwischen dem zweiten Abschnitt und dem dritten Abschnitt der Bohrung angeordneten Spannschraubenkopf **73** hinaussteht, jedoch kürzer als die an den Spannschraubenkopf **73** anschließende Spannschraubenwelle **74** ist.

Die Spannmutter **60** des Einschraubmechanismus weist in der in Fig. 2 dargestellten Ausführungsform am vorderen Ende zur Befestigung des Spannseils eine Bohrung **61** auf, deren Durchmesser im wesentlichen dem des Spannseils entspricht. In dieser Bohrung kann das Spannseil mittels eines Gewindestiftes **64** festgeklemmt werden. Alternativ können noch weitere Gewindeschrauben vorgesehen sein, um eine feste Klemmverbindung herzustellen. An die Bohrung **61** schließt sich eine weitere Bohrung **62** mit Innengewinde **63** an. Dieses Innengewinde ist auf das im ersten Schaftabschnitt der Spannschraube **70** angeordnete Außengewinde **72** abgestimmt. Die Länge der Bohrung **62** der Spannmutter **60** ist so gewählt, daß sie den Schaft **71** der Spannschraube **70** vollständig aufnehmen kann.

Wie in Fig. 2 gezeigt, ist der Einschraubmechanismus mittels einer am Kopf **74** der Spannschraube **70** anliegenden, formschlüssig mit dem dritten Abschnitt **33** der Hülsenelementbohrung ausgelegten Wellensicherung **80** axial gesichert. Die Wellensicherung **80** ist dabei vorzugsweise als Sicherungsring ausgelegt. Weiterhin kann eine, in Fig. 2 nicht gezeigte ringförmige Vertiefung im dritten Abschnitt **33** der Hülsenelementbohrung zur Aufnahme eines solchen Sicherungsrings vorgesehen sein. Auf der über das Hülsenelement **30** hinausstehenden Welle **73** der Spannschraube **70** kann, wie in Fig. 1 gezeigt, mittels einer durch den Gewindestift **77** erzeugten Klemmverbindung ein Drehknopf **76** angeordnet werden.

Die in Fig. 1 bis 3 gezeigte Ausführungsform der erfindungsgemäßen Seilspannvorrichtung gewährleistet sowohl eine einfache Montage als auch ein leichtgängiges Seilspannen. Zur Montage der Spannvorrichtung wird zuerst der Fußabschnitt **10** an der Wand oder Decke befestigt. Anschließend wird das Ende des Spannseils **40** in der Bohrung **61** der Spannmutter **60** mittels des Gewindestiftes **64** festgeklemmt und die Spannmutter dann in das Hülsenelement **30** bis zum Anschlag **34** zwischen dem ersten Abschnitt **31** und dem zweiten Abschnitt **32** der Bohrung eingeführt. Dann wird die Spannschraube mit ihrem Gewindeteils **71** in die Spannmutter **60** eingeschraubt, bis der Kopf **74** am Anschlag **35** zwischen dem zweiten Abschnitt **32** und dem dritten Abschnitt **33** der Hülsenelementbohrung anliegt. Die axiale Lage der gesamten Einschraubverbindung wird anschließend durch die am Kopf **73** anliegend, im dritten Abschnitt **33** der Hülsenelementbohrung verspannten Wellensicherung **80** bezüglich ihrer axialen Lage gesichert. Dann wird der Drehknopf **76** durch Festklemmen der Gewindeschraube **77** auf der Welle **74** der Spannschraube **70** festgeklemmt. Anschließend wird das Hülsenelement **30** im Rohrlager **20** montiert und dieses dann auf dem Fußabschnitt **10** mittels Klemmverbindung durch die Gewindeschraube **11** festgehalten.

Zum Spannen des Spannseils wird die Spannschraube **70** durch Drehung des Drehknopfes **76** in die Spannmutter **60** eingeschraubt, wobei die mit dem Spannseil verbundene Spannmutter gegen die Spannseilrichtung aus der in Fig. 2 gezeigten Stellung auf die Spannschraube **60** zurückgezogen wird. Auf diese Weise wird ein leichtgängiges Spannen des Spannseils erreicht, da entgegen den bekannten Seilspannvorrichtungen nicht das mit dem Spannseil verbundene Element der Einschraubverbindung zum Ausführen der Verschraubung gedreht werden muß.

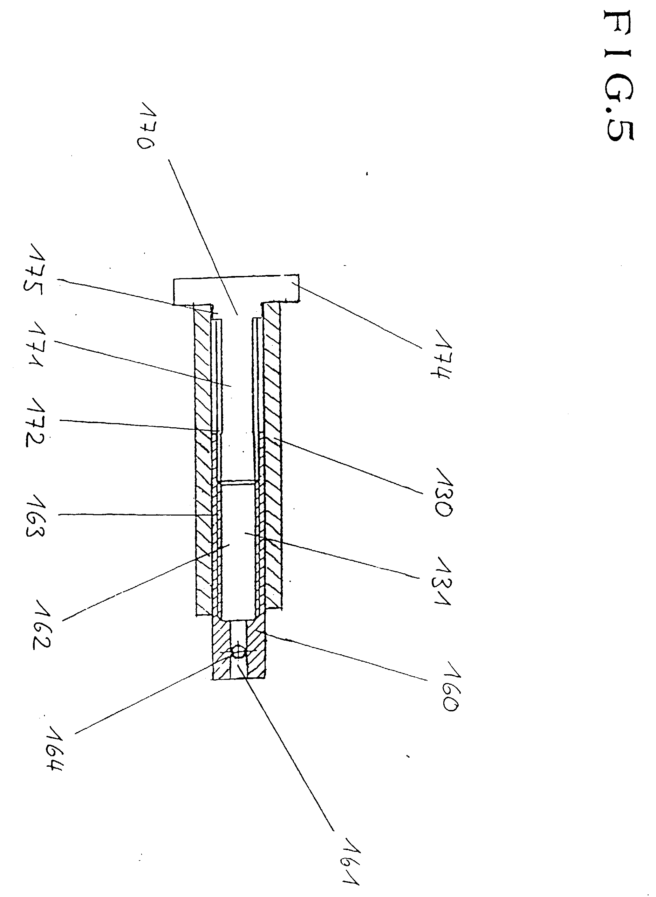

In den Fig. 4 und 5 ist eine weitere Ausführungsform der erfindungsgemäßen Seilspannvorrichtung dargestellt, wobei dieselben Bezugszeichen für mit der ersten Ausführungsform identische Bauteile verwendet sind.

Bei dieser zweiten Ausführungsform weist ein Hülsenelement **130** eine durchgehende, vorzugsweise runde Bohrung 31 mit einem einheitlichen Durchmesser auf, der dem der Spannmutter **160** entspricht. Die Spannmutter **160** weist, ähnlich der in Fig. 2 gezeigten, eine Bohrung **61** zur Aufnahme des Spannseils, einen Gewindestift **64** zum Festklemmen des Spannseils in der Bohrung **61** sowie eine weitere Bohrung **62** mit Innengewinde zum Einschrauben der Spannschraube **170** auf. Die Spannmutter **160** hat jedoch vorzugsweise einen kreisrunden Querschnitt.

Die bei der zweiten Ausführungsform verwendete Spannschraube **170** besteht aus einem Schaft **171**, der vollständig mit einem Außengewinde **172** versehen ist, das in das Innengewinde **163** der Spannmutter **160** einschraubbar ist. Die Spannschraube **170** weist weiter einen gegenüber dem Schaft **171** verbreiterten Kopf **174** auf, dessen Durchmesser größer ist als der der Bohrung **131** des Hülsenelements **130**. Weiterhin ist die Spannschraube **170** am Schaft-Kopf-Übergang mit einem verbreiterten Bereich **175** versehen, der denselben Durchmesser und Querschnitt wie die Bohrung **131** des Hülsenelements **130** aufweist. Dieser Übergangsbereich **175** sorgt für eine exakte Führung der Schraube im Hülsenelement und somit für leichtgängige Schraubbewegungen beim Seilspannen.

Die Länge des Hülsenelements **130** kann so gewählt werden, daß die Einschraubverbindung ab dem Kopf-Schaft-Übergang **175** vollständig in dem Hülsenelement **130** aufgenommen wird. Es ist aber auch möglich, wie in Fig. 5 dargestellt, daß das Anfangsstück der Spannmutter **160** aus dem Hülsenelement **130** herausragt. Die Montage der zweiten Ausführungsform der erfindungsgemäßen Seilspannvorrichtung entspricht weitgehend der der ersten Ausführungsform. Es ist jedoch keine Wellensicherung und kein Drehknopf vorgesehen. Bei der zweiten Ausführungsform wird zum Anziehen des Spannseiles **40** die Schraubenbewegung direkt mit dem aus dem Hülsenelement **130** herausstehenden Spannschraubenkopf **74** ausgeführt. Beim Spannen des Seils wird die Spannmutter **160** gegen die Spannseilrichtung auf die Spannschraube **170** durch Einschrauben gezogen. Die gesamte Einschraubverbindung wird dabei axial in Richtung des Spannseiles durch den Anschlag des Spannschraubenkopfes **170** am Ende des Hülsenelements **130** gesichert.

Die erfindungsgemäße Seilspannvorrichtung ist nicht auf die beiden oben dargestellten Ausführungsformen beschränkt. Insbesondere ist es z.B. möglich, eine einteilige Spannschraube, ähnlich der für die zweite Ausführungsform dargestellten, bei der ersten Ausführungsform einzusetzen. Auch kann bei der ersten Ausführungsform auf den Endabschnitt **33** des Hülsenelements **30** und die Wellensicherung **80** verzichtet werden. Dies sorgt für einen einfacheren Aufbau der erfindungsgemäßen Seilspannvorrichtung sowie geringere Herstellungskosten.

Weiterhin ist es möglich, Spannmutter und Spannschraube in den beiden dargestellten Auführungsformen miteinander zu vertauschen, so daß das Spannseil an der Spannschraube befestigt ist und die Drehbewegungen mit der Spannmutter ausgeführt werden.

Die einzelnen Teile der erfindungsgemäßen Seilspannvorrichtung werden vorzugsweise aus Messing gefertigt, wobei die außen sichtbaren Oberflächen der einzelnen Bauteile poliert oder matt, verchromt, lackiert, mit Nickel bezogen oder bronziert sein können.

## Patentansprüche

1. Seilspannvorrichtung mit
einem Trägerteil (10, 20) zur Befestigung an einer Wand oder Decke und
einem mit dem Trägerteil (10, 20) verbundenen Hülsenelement (30), das eine durchgehende Bohrung (31, 32, 33) zur Aufnahme einer Einschraubverbindung (60, 70) enthält,
**dadurch gekennzeichnet,** daß
die Bohrung (31, 32, 33) des Hülsenelements (30) wenigstens zwei Abschnitte aufweist, wobei ein erster Abschnitt (31) einen Durchmesser besitzt, der kleiner ist als der Durchmesser des mit Mitteln zum Befestigen des Spannseils versehenen Verbindungselements (60) und ein zweiter an den ersten Abschnitt anschließender Abschnitt (32) einen im wesentlichen dem Durchmesser dieses Verbindungselements entsprechenden Durchmesser besitzt,
das zweite, nicht mit Mitteln zum Befestigen des Spannseils (40) versehene Verbindungselement (70) einen Kopfbereich (73, 74) enthält, dessen Durchmesser größer ist als der des zweiten Abschnitts (32) der Bohrung (31, 32, 33), und
das Hülsenelement (30) mittels einer Klemmverbindung (11) am Trägerteil (10, 20) lösbar angebracht ist.

2. Seilspannvorrichtung gemäß Anspruch 1, dadurch gekennzeichnet, daß der Kopfbereich (73, 74) des zweiten Verbindungselements (70) über das Hülsenelement (30) hinaussteht.

3. Seilspannvorrichtung gemäß Anspruch 1 oder 2, dadurch gekennzeichnet, daß die Bohrung (31, 32, 33) des Hülsenelements (30) einen an den zweiten Abschnitt (32) anschließenden dritten Abschnitt (33) mit einem wenigstens einem ersten Teil (73) des Kopfbereichs (73, 74) des zweiten Verbindungselements (70) entsprechenden Durchmesser aufweist.

4. Seilspannvorrichtung gemäß Anspruch 3, dadurch gekennzeichnet, daß der Kopfbereich (73, 74) einen zweiten wellenartig ausgebildeten Teil (74) aufweist, dessen Durchmesser kleiner ist als der des ersten Teils (73).

5. Seilspannvorrichtung gemäß Anspruch 4, gekennzeichnet durch eine Wellensicherung (80) die an dem ersten Teil (73) des Kopfbereichs (73, 74) zum Festhalten der axialen Lage der Einschraubverbindung (60, 70) angeordnet ist.

6. Seilspannvorrichtung gemäß Anspruch 4 oder 5, gekennzeichnet durch einen, an dem zweiten wellenartig ausgebildeten Teil (74) des Kopfbereichs (73, 74) lösbar befestigbaren Drehknopf (76).

7. Seilspannvorrichtung gemäß einem der Ansprüche 1 bis 6, dadurch gekennzeichnet, daß das erste Verbindungselement (60) mutterartig und das zweite Verbindungselement (70) schraubenartig ausgebildet ist.

8. Seilspannvorrichtung gemäß Anspruch 7, dadurch gekennzeichnet, daß das erste Verbindungselement (60) als Sechskanthülse ausgelegt ist und der zweite Abschnitt (32) der Bohrung (31, 32, 33) des Hülsenelements (30) mit einem sternförmigen Querschnitt mit sechs oder einem Mehrfachen von sechs Kanten versehen ist.

## Claims

1. A cable tensioning device having
a supporting part (10, 20) for fixing to a wall or ceiling, and
having a bushing element (30) which is joined to the supporting part (10, 20) and which has a bore (31, 32, 33) passing through it for receiving a screwed-in connection (60, 70),
**characterised in that**
the bore (31, 32, 33) of the bushing element (30) comprises at least two sections, wherein a first section (31) has a diameter which is smaller than the diameter of the connection element (60) which is provided with means for fixing the tensioning cable, and a second section (32) which adjoins the first section has a diameter which substantially corresponds to the diameter of said connection element,
the second connection element (70), which is not provided with means for fixing the tensioning cable (40), contains a head region (73, 74), the diameter of which is larger than that of the second section (32) of the bore (31, 32, 33), and
the bushing element (30) is detachably mounted on the supporting part (10, 20) by means of a clamped joint (11).

2. A cable tensioning device according to claim 1, characterised in that the head region (73, 74) of the second connection element (70) protrudes beyond the bushing element (30).

3. A cable tensioning device according to claims 1 or 2, characterised in that the bore (31, 32, 33) of the bushing element (30) comprises a third section (33) which adjoins the second section (32) and which has a diameter corresponding to at least a first part (73) of the head region (73, 74) of the second connection element (70).

4. A cable tensioning device according to claim 3, characterised in that the head region (73, 74) comprises a second part (74) of spindle-like construction, the diameter of which is smaller than that of the first part (73).

5. A cable tensioning device according to claim 4, characterised by a spindle securing device (80) which is disposed on the first part (73) of the head region (73, 74) for securing the axial position of the screwed-in connection (60, 70).

6. A cable tensioning device according to claims 4 or 5, characterised by a rotary knob (76) which is detachably fastened to the second part (74), which is of spindle-like construction, of the head region (73, 74).

7. A cable tensioning device according to any one of claims 1 to 6, characterised in that the first connection element (60) is constructed in the manner of a nut and the second connection element (70) is constructed in the manner of a screw.

8. A cable tensioning device according to claim 7, characterised in that the first connection element (60) is designed as a hexagonal bushing, and the second section (32) of the bore (31, 32, 33) of the bushing element (30) is provided with a star-shaped cross-section with six or a multiple of six sides.

## Revendications

1. Dispositif tendeur de câble comprenant
une partie porteuse (10, 20) à fixer à un mur ou à un plafond et
un élément formant fourreau (30) qui est relié à la partie porteuse (10, 20) et qui est pourvu d'un perçage débouchant (31, 32, 33) pour recevoir une liaison vissée (60, 70),
caractérisé en ce que
le perçage (31, 32, 33) de l'élément formant fourreau (30) comporte au moins deux portions, une première portion (31) possédant un diamètre inférieur à celui de l'élément de liaison (60) muni de moyens pour fixer le câble tendeur, et une deuxième portion (32) prolongeant la première portion possédant un diamètre correspondant sensiblement au diamètre dudit élément de liaison,
le deuxième élément de liaison (70) dépourvu de moyens pour fixer le câble tendeur (40) comprend une zone de tête (73, 74) dont le diamètre est supérieur à celui de la deuxième portion (32) du perçage (31, 32, 33), et
l'élément formant fourreau (30) est monté sur la partie porteuse (10, 20) de manière amovible au moyen d'une liaison par serrage (11).

2. Dispositif tendeur de câble selon la revendication 1, caractérisé en ce que la zone de tête (73, 74) du deuxième élément de liaison (70) dépasse de l'élément formant fourreau (30).

3. Dispositif tendeur de câble selon la revendication 1 ou 2, caractérisé en ce que le perçage (31, 32, 33) de l'élément formant fourreau (30) comporte une troisième portion (33) qui prolonge la deuxième portion (32) et qui possède un diamètre correspondant au moins à une première partie (73) de la zone de tête (73, 74) du deuxième élément de liaison (70).

4. Dispositif tendeur de câble selon la revendication 3, caractérisé en ce que la zone de tête (73, 74) comporte une deuxième partie formant arbre (74) dont le diamètre est inférieur à celui de la première partie (73).

5. Dispositif tendeur de câble selon la revendication 4, caractérisé par un moyen de blocage d'arbre (80) qui est disposé sur la première partie (73) de la zone de tête (73, 74) pour maintenir la position axiale de la liaison vissée (60, 70).

6. Dispositif tendeur de câble selon la revendication 4 ou 5, caractérisé par un bouton tournant (76) fixé de manière amovible à la deuxième partie formant arbre (74) de la zone de tête (73, 74).

7. Dispositif tendeur de câble selon une des revendications 1 à 6, caractérisé en ce que le premier élément de liaison (60) est conçu en forme d'écrou et le deuxième élément de liaison (70) est conçu en forme de vis.

8. Dispositif tendeur de câble selon la revendication 7, caractérisé en ce que le premier élément de liaison (60) est conçu sous la forme d'un fourreau hexagonal et la deuxième portion (32) du perçage (31, 32, 33) de l'élément formant fourreau (30) possède une section en étoile avec un nombre d'arêtes égal à six ou à un multiple de six.
